# EUROPEAN PATENT SPECIFICATION

(11) **EP 3 595 325 B1**
(45) Date of publication and mention of the grant of the patent: **01.09.2021**
(21) Application number: 18776206.7
(22) Date of filing: 21.03.2018
(51) Int. Cl.: H04N 21/6405, H04N 21/266, H04N 21/258, H04N 21/6402

(54) **METHOD FOR REALIZING MULTICAST AND RELEVANT NETWORK DEVICE**
VERFAHREN ZUR REALISIERUNG VON MULTICAST UND ZUGEHÖRIGE NETZWERKVORRICHTUNG
PROCÉDÉ DE MULTIDIFFUSION ET DISPOSITIF DE RÉSEAU ASSOCIÉ

(30) Priority: 31.03.2017 CN 201710211146
(43) Date of publication of application: 15.01.2020
(73) Proprietor: Huawei Technologies Co., Ltd., Longgang District Shenzhen, Guangdong 518129 (CN)
(72) Inventor: LIN, Lin, Shenzhen Guangdong 518129 (CN)
(74) Representative: Isarpatent
(86) International application number: PCT/CN2018/079796
(87) International publication number: WO 2018/177173

(56) References cited:
- WO-A1-2017/000720
- CN-A- 101 242 291
- CN-A- 101 374 225
- CN-A- 101 374 225
- CN-A- 101 946 458
- CN-A- 105 049 954
- CN-A- 106 302 566
- US-A1- 2010 329 172
- US-A1- 2011 219 138

## Description

### TECHNICAL FIELD

This application relates to the Internet field, and in particular, to a multicast implementation method and a related network device.

### BACKGROUND

For a web television (Internet Protocol Television, IPTV) service developed by a telecom carrier, there are three common IP network data transmission manners: (1) unicast transmission, (2) broadcast transmission, and (3) multicast transmission. The multicast transmission has advantages such as high efficiency and relatively low network bandwidth, and therefore is widely used.

Because currently a network multicast capability is not open to an Internet application (Over The Top, OTT) carrier, all existing OTT live services are implemented in a unicast transmission manner. To improve a network transmission speed, an existing mainstream solution for OTT video on-live and video on demand is establishing a content delivery network (Content Delivery Network, CDN) node to transmit a video resource for a user closest to the CDN node.

In the prior art, the multicast capability is not open to the OTT carrier. When a large quantity of users watch a live channel of same content, because only the unicast transmission manner can be used, the CDN node needs to distribute one data stream to each user. In this case, the CDN node needs to consume plenty of network bandwidth and output load.

CN 106 302 566 A discloses a media data live broadcast method, a device, and a system. An over the top (OTT) live proxy server device includes a processor and non-transitory computer-readable storage medium storing instructions for allocating a multicast resource to a specified channel according to a media description and resource allocation indication of the channel, instructing the OTT live proxy server to allocate the multicast resource to the specified channel, the media description including at least one resolution of the specified channel and a uniform resource locator corresponding to resolution media data, and the multicast resource including a multicast group corresponding to the specified channel, obtaining, from an OTT server to which the specified channel belongs according to the media description of the specified channel, the resolution media data, converting the media data into multicast media data, and sending the multicast media data to the multicast group in a multicast manner.

### SUMMARY

The scope of protection of the present invention is as defined in the appended claims. Any embodiment not falling within such scope should be construed as examples which do not describe parts of the invention.

### BRIEF DESCRIPTION OF DRAWINGS

FIG. 1 is a schematic diagram of data transmission in a network according to an embodiment of this application;
FIG. 2A and FIG. 2B are a schematic diagram of an embodiment of a multicast implementation method according to the embodiments of this application;
FIG. 3 is a schematic diagram of another embodiment of a multicast implementation method according to the embodiments of this application;
FIG. 4A and FIG. 4B are a schematic diagram of another embodiment of a multicast implementation method according to the embodiments of this application;
FIG. 5 is a schematic diagram of an embodiment of a live service server according to the embodiments of this application;
FIG. 6 is a schematic diagram of another embodiment of a live service server according to the embodiments of this application;
FIG. 7 is a schematic diagram of another embodiment of a live service server according to the embodiments of this application;
FIG. 8 is a schematic diagram of an embodiment of a multicast resource management server according to the embodiments of this application;
FIG. 9 is a schematic diagram of another embodiment of a multicast resource management server according to the embodiments of this application;
FIG. 10 is a schematic diagram of another embodiment of a multicast resource management server according to the embodiments of this application;
FIG. 11 is a schematic diagram of another embodiment of a live service server according to the embodiments of this application; and
FIG. 12 is a schematic diagram of another embodiment of a multicast resource management server according to the embodiments of this application.

### DESCRIPTION OF EMBODIMENTS

Embodiments of this application provide a multicast implementation method and a related network device, to reduce network bandwidth and output load of a live stream in a network transmission process.

In the specification, claims, and accompanying drawings of this application, the terms "first", "second", "third", "fourth", and the like (if any) are intended to distinguish between similar objects but unnecessarily indicate a specific order or sequence. It should be understood that the data termed in such a way is interchangeable in a proper circumstance so that the embodiments described herein can be implemented in an order other than the order illustrated or described herein. In addition, the terms "include", "contain", and any other variants thereof are intended to cover non-exclusive inclusion. For example, a process, method, system, product, or device that includes a series of steps or units is unnecessarily limited to those expressly listed steps or units, but may include other steps or units that are not expressly listed or that are inherent to such a process, method, system, product, or device.

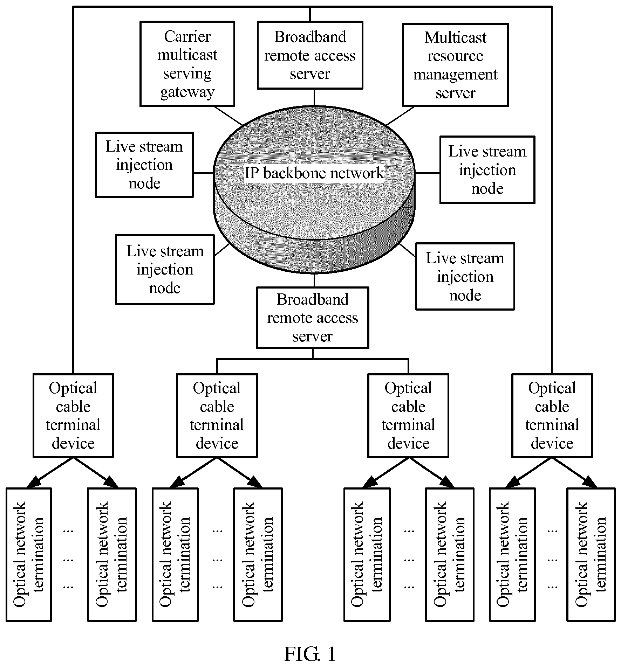

With development of an IPTV service, more live streams need to be transmitted, usage of an unicast manner in which network bandwidth is occupied is gradually reduced, and a multicast manner is more frequently used for live stream transmission. FIG. 1 is a schematic diagram of data transmission in a network according to an embodiment of this application. The schematic diagram includes an IP backbone network, a carrier multicast serving gateway, a multicast resource management server, live stream injection nodes, broadband remote access servers (Broadband Remote Access Server, BRAS), optical cable terminal devices (Optical Line Terminal, OLT), and optical network devices (Optical Network Termination, ONT).

The carrier multicast serving gateway and the multicast resource management server select an appropriate live stream injection node for a live stream to be transmitted in the network. The live stream injection node is configured to inject a live stream into the network. The BRAS is a new access gateway oriented to a broadband network application. The BRAS is a bridge between a broadband access network and the backbone network, and provides a basic access means and a function of managing the broadband access network. The BRAS is located on the edge of the network, provides a broadband access service and implements convergence and forwarding of a plurality of services, and can meet requirements of different users for a transmission capacity and bandwidth usage. The BRAS is a core device for broadband user access. The OLT is a device on a central office end and is configured to be connected to the ONT. The ONT is a device on a user end.

Then, when the carrier multicast serving gateway and the multicast resource management server allocate an appropriate live stream injection node for a live stream, the live stream is injected into the network by the live stream injection node. Then, according to a requirement of a user terminal, namely, the optical network device, the BRAS delivers the live stream to the OLT, and the OLT delivers the live stream to the optical network device. In this way, the live stream is transmitted to the user terminal, namely, the optical network device, by using the network. This implements data transmission in the network.

To facilitate understanding of the embodiments of this application, the following describes in detail a multicast implementation method in the embodiments of this application from perspectives of a single multicast resource management server and at least two multicast resource management servers. Details may be as follows:

It should be noted that in Embodiment 1 and Embodiment 2, the multicast implementation method in the embodiments of this application is described from a perspective of only one multicast resource management server.

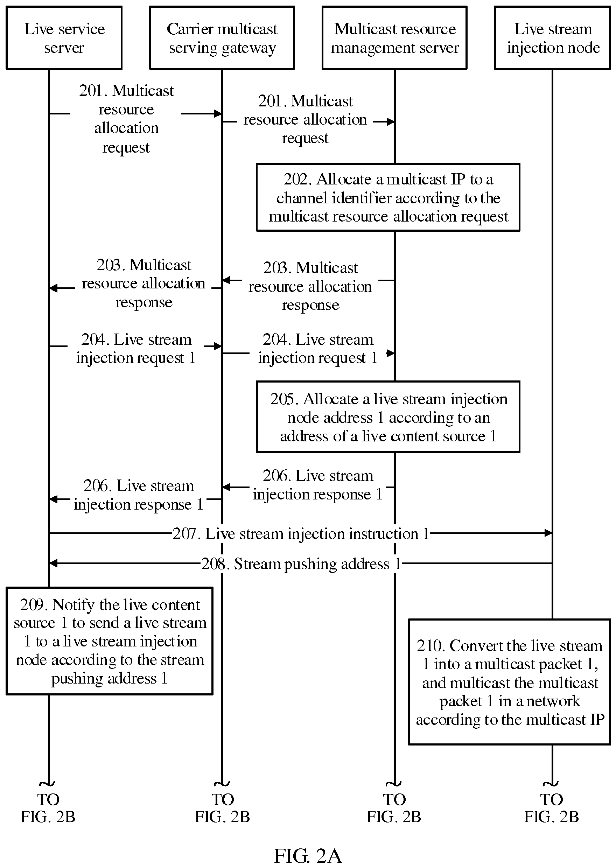

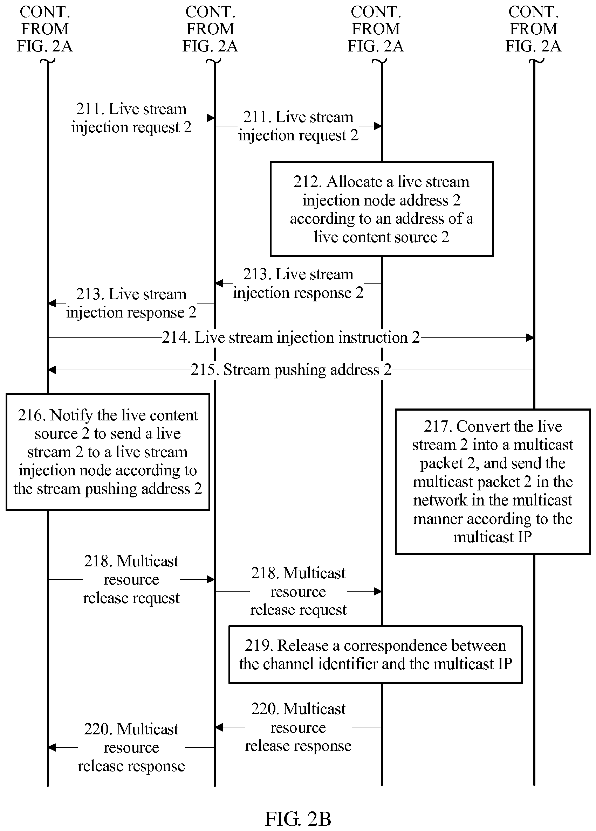

Embodiment 1: Referring to FIG. 2A and FIG. 2B, when there is only one multicast resource management server, an embodiment of the multicast implementation method in the embodiments of this application includes the following steps.

201. A live service server sends a multicast resource allocation request to a carrier multicast serving gateway, and the carrier multicast serving gateway forwards the multicast resource allocation request to the multicast resource management server, where the multicast resource allocation request includes a channel identifier.

In this embodiment, the live service server sends the multicast resource allocation request to the carrier multicast serving gateway, and the carrier multicast serving gateway forwards the multicast resource allocation request to the multicast resource management server, where the multicast resource allocation request includes the channel identifier. In addition, the multicast resource allocation request is used to apply to the multicast resource management server for a multicast resource for the channel identifier. It may be understood that a multicast IP address is only one type of multicast resource.

It should be understood that the channel identifier may be an identifier of a channel, for example, a channel identifier of CCTV5. The channel identifier corresponds to one channel. The multicast resource may include the multicast IP address, and may further include another related resource used to implement multicast.

In this embodiment, the live service server is a server that manages an OTT live channel. Specific functions of the live service server may include: managing a live channel, interacting with the carrier multicast serving gateway, applying for and releasing a multicast resource, collecting hot statistics for the live channel, and dynamically controlling the live channel (for example, converting the live channel from unicast into multicast). The carrier multicast serving gateway is configured to: manage and allocate a multicast resource, control a multicast live stream injection gateway, perform charging for multicast resource leasing, and the like.

It should be noted that not all multicast serving gateways in a carrier network may be used, and the carrier multicast serving gateway is determined according to a multicast requirement. A specific determining manner is as follows:

Optionally, in a possible predetermined manner, the live service server determines, according to a preselected activity plan, a carrier multicast serving gateway that needs to perform multicast. Likewise, a multicast resource management server corresponding to the carrier multicast serving gateway is also determined. For example, an OTT business management personnel prepares to publish an OTT live broadcast (for example, a large concert live broadcast) according to an activity plan, and the live service server collects heat statistics for a live channel corresponding to this OTT live broadcast, to obtain expected OTT user quantity distribution of this OTT live broadcast. It is assumed that a heat statistics collection result shows that an OTT user quantity in Guangdong Province is expected to be relatively large and an OTT user quantity in Guangxi Province and an OTT user quantity in Jiangxi Province are expected to be relatively small. In this case, based on the statistics collection result, the live service server determines a carrier multicast serving gateway of Guangdong Province as a carrier multicast serving gateway that needs to perform multicast, and determines a carrier multicast serving gateway of Guangxi Province and a carrier multicast serving gateway of Jiangxi Province as carrier multicast serving gateways that do not need to perform multicast.

It should be understood that a network access capability of an OTT user is provided by different carriers, and networking may be separately performed for a same carrier due to different administrative divisions. In this case, respective carrier multicast serving gateways are required in different administrative divisions. For example, a province in which a company serving a user is located is determined by dividing China into provinces, and therefore there are carrier multicast serving gateways of different provinces.

Optionally, in another possible dynamic determining manner, the live service server sends the multicast resource allocation request to the carrier multicast serving gateway when a quantity of target clients is greater than a first threshold, so that the carrier multicast serving gateway forwards the multicast resource allocation request to the multicast resource management server. A specific implementation may be as follows: An OTT live broadcast whose OTT user quantity is originally expected to be less than a preset first threshold is unicast. However, in a live broadcast process, the OTT user quantity continuously increases, and when the live service server detects that the OTT user quantity reaches the first threshold, the live service server determines a corresponding multicast serving gateway as a multicast serving gateway that needs to perform multicast.

202. The multicast resource management server allocates a multicast IP address to the channel identifier according to the multicast resource allocation request.

In this embodiment, after the multicast resource management server receives the multicast resource allocation request forwarded by the carrier multicast serving gateway, the multicast resource management server allocates the multicast IP address to the channel identifier carried in the multicast resource allocation request, and determines a correspondence between the multicast IP address and the channel identifier. It should be understood that the channel identifier is an identifier used by the live service server to apply to the multicast resource management server for the multicast resource.

203. The multicast resource management server sends a multicast resource allocation response to the carrier multicast serving gateway, and the carrier multicast serving gateway forwards the multicast resource allocation response to the live service server, where the multicast resource allocation response includes a correspondence between the channel identifier and the multicast IP address.

In this embodiment, after the multicast resource management server allocates the multicast IP address to the channel identifier according to the multicast resource allocation request, the multicast resource management server sends the multicast resource allocation response to the carrier multicast serving gateway, so that the carrier multicast serving gateway forwards the multicast resource allocation response to the live service server. The multicast resource allocation response carries the correspondence between the channel identifier and the multicast IP address.

It should be understood that when the live service server receives the multicast resource allocation response forwarded by the carrier multicast serving gateway, because the multicast resource allocation response carries the correspondence between the channel identifier and the multicast IP address, the live service server can learn, according to the correspondence, of the multicast IP address allocated by the multicast resource management server to the channel identifier.

Optionally, in a possible implementation, after the live service server receives the multicast resource allocation response forwarded by the carrier multicast serving gateway and learns, according to the correspondence, of the multicast IP address allocated by the multicast resource management server to the channel identifier, the live service server instructs to publish the multicast IP address and channel information corresponding to the channel identifier to a user, so that the user logs, on a client by using the multicast IP address, in to the channel corresponding to the channel identifier, to watch a live broadcast.

Then, optionally, a possible implementation in which the live service server instructs to publish the multicast IP address and the channel information corresponding to the channel identifier to the user may be as follows: The live service server sends the multicast IP address and the channel information corresponding to the channel identifier to an OTT portal site, so that the OTT portal site displays the multicast IP address and the channel information corresponding to the channel identifier, so that the user obtains the multicast IP address and the channel information corresponding to the channel identifier through browsing.

204. The live service server sends a live stream injection request 1 to the carrier multicast serving gateway, and the carrier multicast serving gateway forwards the live stream injection request 1 to the multicast resource management server, where the live stream injection request 1 is used to instruct the multicast resource management server to allocate a live stream injection node.

In this embodiment, when the live service server needs to perform multicast, the live service server sends the live stream injection request 1 to the carrier multicast serving gateway, so that the carrier multicast serving gateway forwards the live stream injection request 1 to the multicast resource management server. The live stream injection request 1 is used to instruct the multicast resource management server to allocate a live stream injection node to a live stream 1, so that the live stream 1 is injected into a network for multicast.

205. The multicast resource management server allocates a live stream injection node address 1 according to an address of a live content source 1.

In this embodiment, when the multicast resource management server receives the live stream injection request 1 forwarded by the carrier multicast serving gateway, the multicast resource management server allocates the live stream injection node address 1 to the live stream 1 according to the address of the live content source 1.

Optionally, in another possible allocation manner, the multicast resource management server allocates the live stream injection node address 1 to the live stream 1 according to the address of the live content source 1 and with reference to a current network status. The current network status may be a network transmission status of a CDN near the live content source 1.

It should be understood that one live stream injection node address is similar to one uniform resource locator URL, and may correspond to a plurality of physical addresses (192.168.172.1 to 192.168.172.255).

206. The multicast resource management server sends a live stream injection response 1 to the carrier multicast serving gateway, and the carrier multicast serving gateway forwards the live stream injection response 1 to the live service server, where the live stream injection response 1 includes the live stream injection node address 1.

In this embodiment, after the multicast resource management server allocates the live stream injection node address 1 to the live stream 1, the multicast resource management server sends the live stream injection response 1 to the carrier multicast serving gateway, so that the carrier multicast serving gateway forwards the live stream injection response 1 to the live service server, where the live stream injection response 1 carries the live stream injection node address 1, so that after receiving the live stream injection response 1, the live service server learns that a live stream injection node address of the live stream 1 is the live stream injection node address 1.

207. The live service server sends a live stream injection instruction 1 to a live stream injection node according to the live stream injection node address 1, where the live stream injection instruction 1 includes the multicast IP address and authentication information.

In this embodiment, after the live service server learns of the live stream injection node address 1, the live service server sends the live stream injection instruction 1 to the live stream injection node according to the live stream injection node address 1. The live stream injection instruction 1 includes the multicast IP address and the authentication information, and is used to instruct the live stream injection node to prepare to receive and inject the live stream 1 into the network.

The authentication information is used by the live stream injection node to perform authentication on the live stream injection instruction. After the authentication succeeds, a corresponding subsequent operation is performed.

208. The live stream injection node sends a stream pushing address 1 to the live service server.

In this embodiment, after the live stream injection node receives the live stream injection instruction 1 and the authentication succeeds, the live stream injection node returns the stream pushing address 1 to the live service server. It should be understood that a physical address corresponding to the stream pushing address and the live stream injection node address 1 is, for example, 192.168.172.1.

209. The live service server instructs the live content source 1 to send a live stream 1 to the live stream injection node according to the stream pushing address 1.

In this embodiment, when the live service server receives the stream pushing address 1 sent by the live stream injection node, the live service server instructs the live content source 1 to send the live stream 1 to the live stream injection node according to the stream pushing address 1.

Optionally, the live stream 1 may be a live stream corresponding to a unicast protocol such as an HTTP-based streaming media transport protocol (HTTP Live Streaming, HLS) or a real-time transport protocol (Real-time Transport Protocol, RTP).

210. The live stream injection node converts the live stream 1 into a multicast packet 1, and multicasts the multicast packet 1 in a network according to the multicast IP address.

In this embodiment, when the live stream injection node receives the live stream 1, it should be understood that in this case, the live stream 1 is a unicast packet in a unicast form. Therefore, the live stream injection node converts the unicast packet of the received live stream 1 into the multicast packet 1 in a multicast form, and sends the multicast packet 1 in the multicast manner by using the multicast IP address carried in the live stream injection instruction 1. In this way, multicast of the live stream 1 is implemented.

Optionally, the live stream injection node converts the live stream 1 in the unicast form into the multicast packet 1 in the multicast form and sends the multicast packet 1 to a BRAS; and the BRAS converts a live stream in the multicast form, namely, the multicast packet 1, into the live stream 1 in the unicast form, namely, a unicast packet 1, and delivers the unicast packet 1 to a target client, namely, an ONT, by using an OLT. The target client is a client that joins, by using the multicast IP address, a multicast channel corresponding to the channel identifier.

In addition, in this embodiment, it should be further noted that the OTT user may obtain the correspondence between the channel identifier and the multicast IP address by browsing the OTT portal site. An OTT terminal sends a multicast control protocol according to the multicast IP address, and applies to join the multicast channel corresponding to the channel identifier, to become a target client.

211. The live service server sends a live stream injection request 2 to the carrier multicast serving gateway, and the carrier multicast serving gateway forwards the live stream injection request 2 to the multicast resource management server, where the live stream injection request is used to instruct the multicast resource management server to allocate a live stream injection node.
212. The multicast resource management server allocates a live stream injection node address 2 according to an address of a live content source 2.
213. The multicast resource management server sends a live stream injection response 2 to the carrier multicast serving gateway, and the carrier multicast serving gateway forwards the live stream injection response 2 to the live service server, where the live stream injection response 2 includes the live stream injection node address 2.
214. The live service server sends a live stream injection instruction 2 to a live stream injection node according to the live stream injection node address 2, where the live stream injection instruction 2 includes the multicast IP address and authentication information.
215. The live stream injection node sends a stream pushing address 2 to the live service server.
216. The live service server instructs the live content source 2 to send a live stream 2 to the live stream injection node according to the stream pushing address 2.
217. The live stream injection node converts the live stream 2 into a multicast packet 2, and sends the multicast packet 2 in the network in the multicast manner according to the multicast IP address.

In this embodiment, operations similar to those in steps 204 to 210 are respectively performed in steps 211 to 217, and details are not described herein again.

It should be noted that, in this embodiment, the multicast IP address may be used for a plurality of times of live broadcast through a channel corresponding to one channel identifier. This is not limited herein in this embodiment.

218. The live service server sends a multicast resource release request to the carrier multicast serving gateway, and the carrier multicast serving gateway forwards the multicast resource release request to the multicast resource management server, where the multicast resource release request includes the correspondence between the channel identifier and the multicast IP address.

In this embodiment, when the multicast resource is no longer required and the multicast resource includes the multicast IP address, the live service server sends the multicast resource release request to the carrier multicast serving gateway, so that the carrier multicast serving gateway forwards the multicast resource release request to the multicast resource management server.

The multicast resource release request includes the correspondence between the channel identifier and the multicast IP address. It may be understood that the multicast resource release request is used to apply to the multicast resource management server for releasing the multicast resource including the multicast IP address.

Optionally, when it is detected that the live stream is interrupted, the live service server determines that the multicast resource is no longer required. A specific live stream detection manner is as follows: The live stream injection node may detect and instruct the live service server that the live stream is interrupted. Certainly, another detection manner may be used, or another network element may detect and instruct the live service server that the live stream is interrupted. This is not limited in this embodiment of this application.

219. The multicast resource management server releases the correspondence between the channel identifier and the multicast IP address.

In this embodiment, after the multicast resource management server receives the multicast resource release request forwarded by the carrier multicast serving gateway, the multicast resource management server releases the correspondence that is between the channel identifier and the multicast IP address and that is carried in the multicast resource release request. It should be understood that, herein, release means removing the correspondence between the channel identifier and the multicast IP address, so that a new correspondence can be further established between the multicast IP address and another channel identifier after a preset time period, in other words, the multicast resource management server can further allocate the multicast IP address again.

220. The multicast resource management server sends a multicast resource release response to the carrier multicast serving gateway, and the carrier multicast serving gateway forwards the multicast resource release response to the live service server, where the multicast resource release response is used to instruct the live service server that the correspondence between the channel identifier and the multicast IP address has been released.

In this embodiment, after the multicast resource management server releases the correspondence between the channel identifier and the multicast IP address, the multicast resource management server sends the multicast resource release response to the carrier multicast serving gateway, so that the carrier multicast serving gateway forwards the multicast resource release response to the live service server. It should be understood that the multicast resource release response is used to instruct the live service server that the correspondence between the channel identifier and the multicast IP address has been invalid, so that the live service server can instruct the OTT portal site to discontinue the released correspondence between the channel identifier and the multicast IP address, to prevent a user from misusing the multicast IP address, affecting user experience.

In this embodiment, the live service server obtains the stream pushing address by applying to the multicast resource management server, and instructs the live content source to send the live stream to the live stream injection node corresponding to the stream pushing address, so that the live stream injection node corresponding to the stream pushing address sends the live stream in the multicast manner by using the multicast IP address in the live stream injection instruction. In this way, multicast of the live stream in the network is implemented. Therefore, network bandwidth and output load of the live stream in a network transmission process are effectively reduced, and further a network transmission speed and network transmission efficiency of the live stream are improved.

In addition, there is no one-to-one correspondence between the multicast IP address and the live stream. To be specific, after the live service server obtains a multicast IP address by applying to the multicast resource management server, the live service server may perform at least one time of live broadcast on a live channel by using the multicast IP address. For example, the live service server performs three live broadcasts on the live channel on a same day: a live broadcast 1 from 7:00 to 8:00, a live broadcast 2 from 8:30 to 10:00, and a live broadcast 3 from 10:15 to 12:00. Therefore, the multicast implementation method in this embodiment of this application is more convenient, and a plurality of times of live broadcast can be performed by applying for only one multicast IP address.

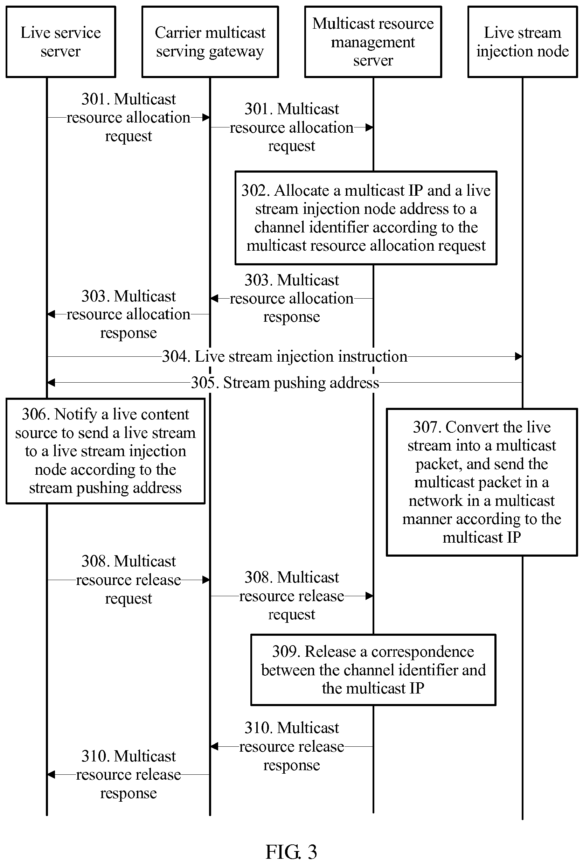

Embodiment 2: Referring to FIG. 3, when there is only one multicast resource management server, an embodiment of the multicast implementation method in the embodiments of this application includes the following steps.

301. A live service server sends a multicast resource allocation request to a carrier multicast serving gateway, and the carrier multicast serving gateway forwards the multicast resource allocation request to the multicast resource management server, where the multicast resource allocation request includes a channel identifier.

In this embodiment, this step is similar to step 201, and details are not described herein again.

302. The multicast resource management server allocates a multicast IP address and a live stream injection node address to the channel identifier according to the multicast resource allocation request.

In this embodiment, after the multicast resource management server receives the multicast resource allocation request forwarded by the carrier multicast serving gateway, the multicast resource management server allocates the multicast IP address and the live stream injection node address to the channel identifier carried in the multicast resource allocation request.

303. The multicast resource management server sends a multicast resource allocation response to the carrier multicast serving gateway, and the carrier multicast serving gateway forwards the multicast resource allocation response to the live service server, where the multicast resource allocation response includes the live stream injection node address and a correspondence between the channel identifier and the multicast IP address.

In this embodiment, after the multicast resource management server allocates the multicast IP address to the channel identifier according to the multicast resource allocation request, the multicast resource management server sends the multicast resource allocation response to the carrier multicast serving gateway, so that the carrier multicast serving gateway forwards the multicast resource allocation response to the live service server. The multicast resource allocation response carries the live stream injection node address allocated by the multicast resource management server and the correspondence between the channel identifier and the multicast IP address.

It should be noted that, all descriptions in this step other than the description that the multicast resource allocation response carries the live stream injection node address are similar to the descriptions in step 203. Details are not described herein again.
304. The live service server sends a live stream injection instruction to a live stream injection node according to the live stream injection node address, where the live stream injection instruction includes the multicast IP address and authentication information.
305. The live stream injection node sends a stream pushing address to the live service server.
306. The live service server instructs a live content source to send a live stream to the live stream injection node according to the stream pushing address.
307. The live stream injection node converts the live stream into a multicast packet, and multicasts the multicast packet in a network according to the multicast IP address.
   In this embodiment, operations similar to those in steps 207 to 210 are performed in steps 304 to 307, and details are not described herein again.
308. The live service server sends a multicast resource release request to the carrier multicast serving gateway, and the carrier multicast serving gateway forwards the multicast resource release request to the multicast resource management server, where the multicast resource release request includes the correspondence between the channel identifier and the multicast IP address.
309. The multicast resource management server releases the correspondence between the channel identifier and the multicast IP address.
310. The multicast resource management server sends a multicast resource release response to the carrier multicast serving gateway, and the carrier multicast serving gateway forwards the multicast resource release response to the live service server, where the multicast resource release response is used to instruct the live service server that the correspondence between the channel identifier and the multicast IP address has been released.

In this embodiment, operations similar to those in steps 218 to 220 are performed in steps 308 to 310, and details are not described herein again.

In this embodiment, the multicast resource management server allocates both the multicast IP address and the live stream injection node address in the multicast resource allocation response. Therefore, the live service server does not need to apply to the multicast resource management server for the live stream injection node address. This embodiment of this application provides another more efficient multicast implementation method.

The foregoing Embodiment 1 and Embodiment 2 describe in detail the multicast implementation method in the embodiments of this application in terms of only one multicast resource management server. The following describes the multicast implementation method in the embodiments of this application in terms of at least two multicast resource management servers.

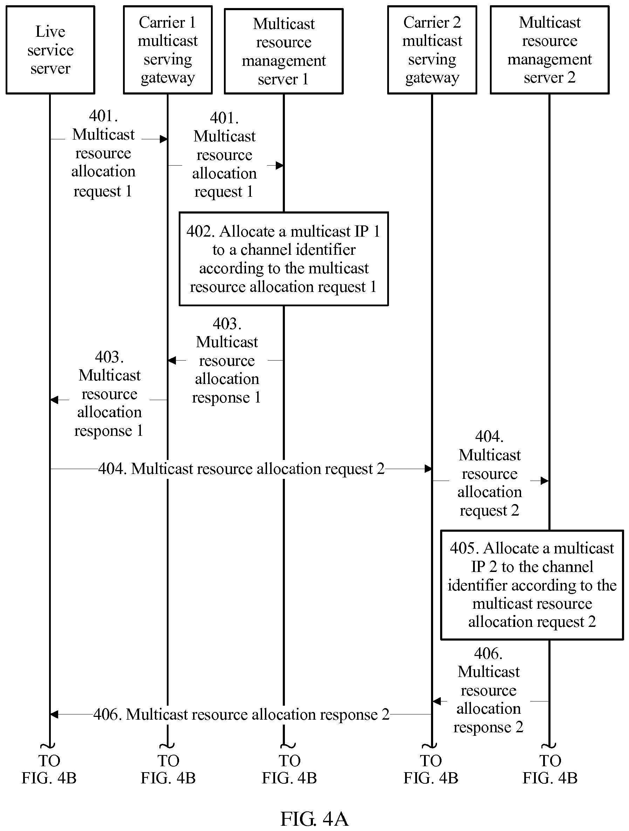

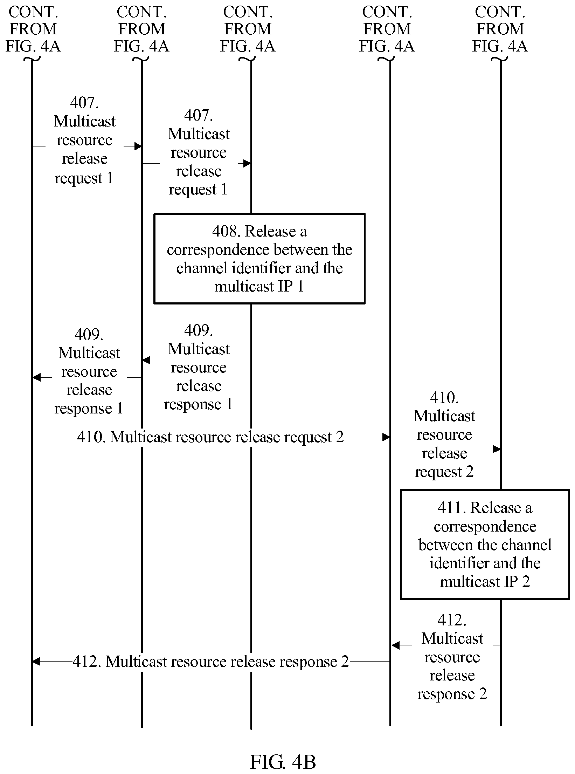

It should be noted that there may be at least two multicast resource management servers. The following Embodiment 3 provides descriptions in terms of two multicast resource management servers. This is not limited herein. As shown in FIG. 4A and FIG. 4B, a carrier 1 multicast serving gateway and a multicast resource management server 1 correspond to a carrier 1, for example, a China Mobile carrier, and a carrier 2 multicast serving gateway and a multicast resource management server 2 correspond to a carrier 2, for example, a China Unicom carrier.

Embodiment 3: Referring to FIG. 4A and FIG. 4B, when there are two multicast resource management servers, another embodiment of the multicast implementation method in the embodiments of this application includes the following steps.
401. A live service server sends a multicast resource allocation request 1 to a carrier 1 multicast serving gateway, and the carrier 1 multicast serving gateway forwards the multicast resource allocation request 1 to a multicast resource management server 1, where the multicast resource allocation request 1 includes a channel identifier.
402. The multicast resource management server 1 allocates a multicast IP address 1 to the channel identifier according to the multicast resource allocation request 1.
403. The multicast resource management server 1 sends a multicast resource allocation response 1 to the carrier 1 multicast serving gateway, and the carrier 1 multicast serving gateway forwards the multicast resource allocation response 1 to the live service server, where the multicast resource allocation response 1 includes a correspondence between the channel identifier and the multicast IP address 1.

In this embodiment, operations similar to those in steps 201 to 203 are respectively performed in steps 401 to 403, and details are not described herein again.

It should be noted that, because the multicast resource management server 1 and a multicast resource management server 2 are from different carriers, the multicast IP address 1 and a multicast IP address 2 that are respectively allocated by the multicast resource management server 1 and the multicast resource management server 2 to the channel identifier are IP addresses corresponding to the different carriers.

Then, it should be further noted that, after step 403, steps similar to steps 204 to 210 in Embodiment 1 may be further performed, and details are not described herein again.
404. The live service server sends a multicast resource allocation request 2 to a carrier 2 multicast serving gateway, and the carrier 2 multicast serving gateway forwards the multicast resource allocation request 2 to a multicast resource management server 2, where the multicast resource allocation request 2 includes the channel identifier.
405. The multicast resource management server 2 allocates a multicast IP address 2 to the channel identifier according to the multicast resource allocation request 2.
406. The multicast resource management server 2 sends a multicast resource allocation response 2 to the carrier 2 multicast serving gateway, and the carrier 2 multicast serving gateway forwards the multicast resource allocation response 2 to the live service server, where the multicast resource allocation response 2 includes a correspondence between the channel identifier and the multicast IP address 2.

In this embodiment, operations similar to those in steps 201 to 203 are respectively performed in steps 404 to 406, and details are not described herein again.

It should be noted that, because the multicast resource management server 1 and the multicast resource management server 2 are from different carriers, the multicast IP address 1 and the multicast IP address 2 that are respectively allocated by the multicast resource management server 1 and the multicast resource management server 2 to the channel identifier are IP addresses corresponding to the different carriers.

Then, it should be further noted that, after step 406, steps similar to steps 204 to 210 in Embodiment 1 may be further performed, and details are not described herein again.

407. The live service server sends a multicast resource release request 1 to the carrier 1 multicast serving gateway, and the carrier 1 multicast serving gateway forwards the multicast resource release request 1 to the multicast resource management server 1, where the multicast resource release request 1includes the correspondence between the channel identifier and the multicast IP address 1.

408. The multicast resource management server 1 releases the correspondence between the channel identifier and the multicast IP address 1.

409. The multicast resource management server 1 sends a multicast resource release response 1 to the carrier 1 multicast serving gateway, and the carrier 1 multicast serving gateway forwards the multicast resource release response 1 to the live service server, where the multicast resource release response 1 is used to indicate, to the live service server, that the correspondence between the channel identifier and the multicast IP address 1 has been released.

In this embodiment, operations similar to those in steps 218 to 220 are respectively performed in steps 407 to 409, and details are not described herein again.
410. The live service server sends a multicast resource release request 2 to the carrier 2 multicast serving gateway, and the carrier 2 multicast serving gateway forwards the multicast resource release request 2 to the multicast resource management server 2, where the multicast resource release request 2 includes the correspondence between the channel identifier and the multicast IP address 2.
411. The multicast resource management server 2 releases the correspondence between the channel identifier and the multicast IP address 2.
412. The multicast resource management server 2 sends a multicast resource release response 2 to the carrier 2 multicast serving gateway, and the carrier 2 multicast serving gateway forwards the multicast resource release response 2 to the live service server, where the multicast resource release response 2 is used to indicate, to the live service server, that the correspondence between the channel identifier and the multicast IP address 2 has been released.

In this embodiment, operations similar to those in steps 218 to 220 are respectively performed in steps 410 to 412, and details are not described herein again.

In this embodiment, the live service server may simultaneously perform multicast on at least two multicast resource management servers. In this way, network bandwidth and output load of a live stream in a network transmission process are effectively reduced, and further a network transmission speed and network transmission efficiency of the live stream are improved. In addition, a multicast area of the multicast implementation method is extended, so that a plurality of multicast resource management servers can be managed together and multicast can be simultaneously performed in different carrier networks.

The foregoing Embodiment 1 to Embodiment 3 separately describe the multicast capability implementation method in the embodiments of this application. The following describes in detail the live service server and the multicast resource management server in the embodiments of this application. Details are as follows:

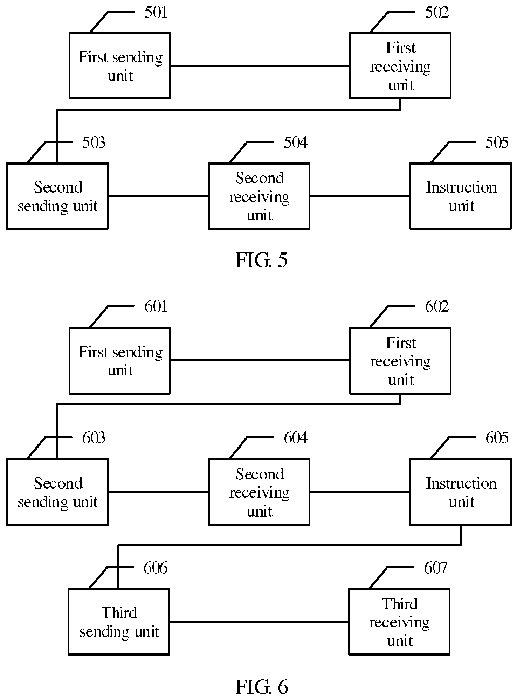

Embodiment 4: Referring to FIG. 5, an embodiment of the live service server in the embodiments of this application includes:
a first sending unit 501, configured to send a live stream injection request to a multicast resource management server, where the live stream injection request is used to instruct the multicast resource management server to allocate a live stream injection node;
a first receiving unit 502, configured to receive a live stream injection response sent by the multicast resource management server, where the live stream injection response includes a live stream injection node address;
a second sending unit 503, configured to send a live stream injection instruction to a live stream injection node according to the live stream injection node address, where the live stream injection instruction carries a multicast IP address and authentication information, so that the live stream injection node returns response information after authentication succeeds;
a second receiving unit 504, configured to receive a stream pushing address sent by the live stream injection node; and
a instruction unit 505, configured to instruct a live content source to send a live stream to the live stream injection node according to the stream pushing address, so that the live stream injection node corresponding to the stream pushing address multicasts the live stream by using the multicast IP address.

Optionally, as shown in FIG. 6, in a possible design, the live service server may further include a third sending unit 606 and a third receiving unit 607. Functions of the two units may be specifically as follows:

The third sending unit 606 is configured to send a multicast resource allocation request to the multicast resource management server, where the multicast resource allocation request includes a channel identifier.

The third receiving unit 607 is configured to receive a multicast resource allocation response sent by the multicast resource management server, where the multicast resource allocation response includes a correspondence between the channel identifier and the multicast IP address.

Then, it should be noted that a first sending unit 601, a first receiving unit 602, a second sending unit 603, a second receiving unit 604, and a instruction unit 605 are respectively configured to perform operations similar to those performed by the first sending unit 501, the first receiving unit 502, the second sending unit 503, the second receiving unit 504, and the instruction unit 505. Details are not described herein again.

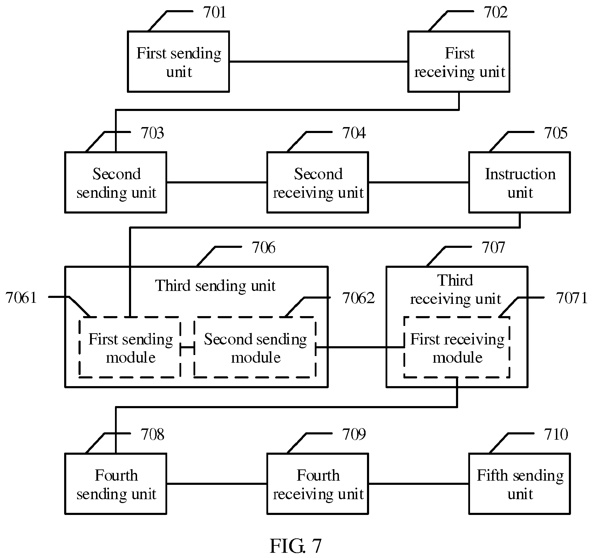

Optionally, as shown in FIG. 7, in a possible design, the live service server may further include a fourth sending unit 708 and a fourth receiving unit 709. Functions of the two units may be specifically as follows:

The fourth sending unit 708 is configured to send a multicast resource release request to the multicast resource management server, where the multicast resource release request includes the correspondence between the channel identifier and the multicast IP address.

The fourth receiving unit 709 is configured to receive a multicast resource release response sent by the multicast resource management server, where the multicast resource release response is used to instruct the live service server that the correspondence between the channel identifier and the multicast IP address has been released.

Then, it should be noted that a first sending unit 701, a first receiving unit 702, a second sending unit 703, a second receiving unit 704, and a instruction unit 705 are respectively configured to perform operations similar to those performed by the first sending unit 601, the first receiving unit 602, the second sending unit 603, the second receiving unit 604, and the instruction unit 605. Details are not described herein again.

Optionally, as shown in FIG. 7, in a possible design, the third sending unit 706 may include a first sending module 7061. The first sending module 7061 is configured to send the multicast resource request to the multicast resource management server when a quantity of target clients is greater than a first threshold, where the target client is a client that has joined, by using the multicast IP address, a multicast channel corresponding to the channel identifier.

Then, it should be noted that the first sending unit 701, the first receiving unit 702, the second sending unit 703, the second receiving unit 704, the instruction unit 705, the third sending unit 706, and a third receiving unit 707 are respectively configured to perform operations similar to those performed by the first sending unit 701, the first receiving unit 702, the second sending unit 703, the second receiving unit 704, the instruction unit 705, the third sending unit 706, and the third receiving unit 707. Details are not described herein again.

Optionally, as shown in FIG. 7, in a possible design, the third sending unit 706 may include a second sending module 7062, and the third receiving unit 707 may include a first receiving module 7071. The functions of the modules may be specifically as follows:

The second sending module 7062 is configured to send N multicast resource allocation requests to N multicast resource management servers, where one multicast resource management server receives only one multicast resource allocation request, and one multicast resource allocation request is used to instruct one multicast resource management server to allocate one multicast IP address to the channel identifier.

The first receiving module 7071 is configured to receive N multicast resource allocation responses sent by the N multicast resource management servers, where one multicast resource management server sends only one multicast resource allocation response, and one multicast resource allocation response is used to indicate one multicast IP address allocated by one multicast resource management server to the channel identifier.

Optionally, as shown in FIG. 7, in a possible design, the live service server may include a fifth sending unit 710. The fifth sending unit is configured to send an instruction message including the correspondence between the channel identifier and the multicast IP address to an OTT portal site, so that a client joins, according to the multicast IP address, a multicast channel corresponding to the channel identifier.

In this embodiment, the live service server obtains the stream pushing address by applying to the multicast resource management server, and instructs the live content source to send the live stream to the live stream injection node corresponding to the stream pushing address, so that the live stream injection node corresponding to the stream pushing address sends the live stream in the multicast manner by using the multicast IP address in the live stream injection instruction. In this way, multicast of the live stream in a network is implemented. Therefore, network bandwidth and output load of the live stream in a network transmission process are effectively reduced, and further a network transmission speed and network transmission efficiency of the live stream are improved.

Embodiment 4 describes in detail the live service server in the embodiments of this application. The following describes the multicast resource management server in the embodiments of this application with reference to Embodiment 5. Details may be as follows:

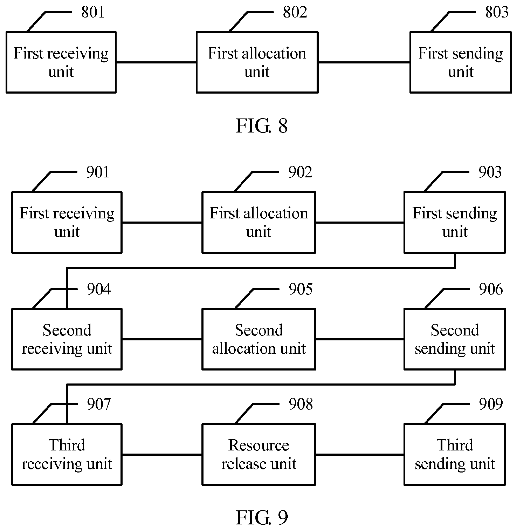

Embodiment 5: Referring to FIG. 8, an embodiment of the multicast resource management server in the embodiments of this application includes:
a first receiving unit 801, configured to receive a live stream injection request sent by a live service server, where the live stream injection request is used to instruct the multicast resource management server to allocate a live stream injection node;
a first allocation unit 802, configured to allocate a live stream injection node address according to an address of a live content source when the multicast resource management server receives the live stream injection request sent by the live service server; and
a first sending unit 803, configured to send a live stream injection response to the live service server, where the live stream injection response includes the live stream injection node address.

Optionally, referring to FIG. 9, in a possible design, the multicast resource management server may further include:
a second receiving unit 904, configured to receive a multicast resource allocation request sent by the live service server, where the multicast resource allocation request includes a channel identifier;
a second allocation unit 905, configured to allocate a multicast IP address to the channel identifier according to the multicast resource allocation request;
a second sending unit 906, configured to send a multicast resource allocation response to the live service server, where the multicast resource allocation response includes a correspondence between the channel identifier and the multicast IP address;
a third receiving unit 907, configured to receive a multicast resource release request sent by the live service server, where the multicast resource release request includes the correspondence between the channel identifier and the multicast IP address;
a resource release unit 908, configured to release the correspondence between the channel identifier and the multicast IP address; and
a third sending unit 909, configured to send a multicast resource release response to the live service server, where the multicast resource release response is used to instruct the live service server that the correspondence between the channel identifier and the multicast IP address has been released.

Then, a first receiving unit 901, a first allocation unit 902, and a first sending unit 903 are respectively configured to implement functions similar to those implemented by the first receiving unit 801, the first allocation unit 802, and the first sending unit 803. Details are not described herein again.

In this embodiment, the multicast resource management server sends the live stream injection node address to the live service server, so that the live service server performs a corresponding operation according to the live stream injection node address. In this way, multicast of a live stream is implemented. Therefore, network bandwidth and output load of the live stream in a network transmission process are effectively reduced, and further a network transmission speed and network transmission efficiency of the live stream are improved.

Optionally, in a possible implementation, when there are N multicast resource management servers and N is a positive integer greater than 1, each multicast resource management server includes one second receiving unit, one second allocation unit, and one second sending unit. Therefore, when there are the N multicast resource management servers, there are N second receiving units, N second allocation units, and N second sending units in the N multicast resource management servers.

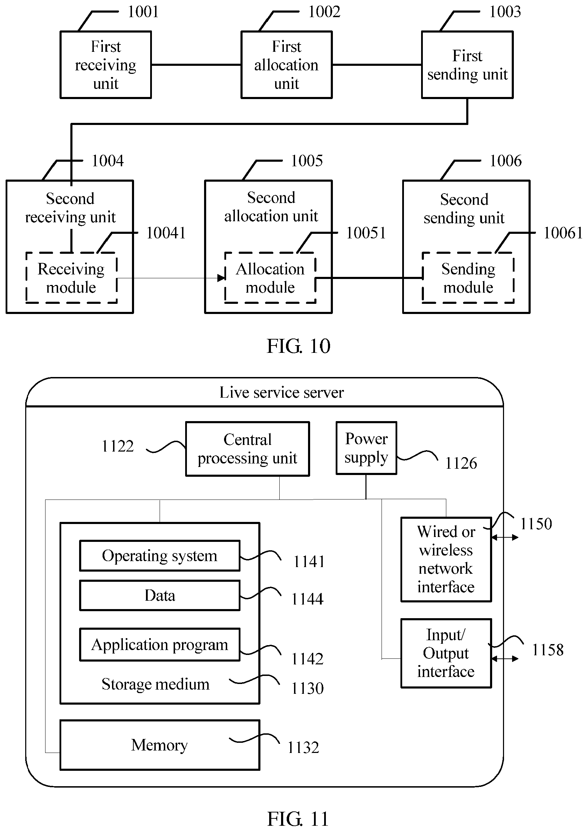

Based on the foregoing case of the N multicast resource management servers, the following uses one of the N multicast resource management servers as an example to describe the N multicast resource management servers. It should be understood that in this case, the N multicast resource management servers implement similar functions in this embodiment. Therefore, for another multicast resource management server, refer to a multicast resource management server shown in FIG. 10.

As shown in FIG. 10, the multicast resource management server may include a second receiving unit 1004, a second allocation unit 1005, and a second sending unit 1006. The second receiving unit 1004 includes a receiving module 10041, the second allocation unit 1005 includes an allocation module 10051, and the second sending unit 1006 includes a sending module 10061. Specific functions of the modules are as follows:

The receiving module 10041 is configured to receive one of N multicast resource allocation requests sent by the live service server.

The allocation module 10051 is configured to allocate one of N multicast IP addresss to the channel identifier according to the multicast resource allocation request received by the receiving module 10041.

The sending module 10061 is configured to send one of N multicast resource allocation responses to the live service server, where the multicast resource allocation response includes the multicast IP address allocated by the allocation module 10051 to the channel identifier.

Then, a first receiving unit 1001, a first allocation unit 1002, and a first sending unit 1003 respectively implement functions similar to those implemented by the first receiving unit 801, the first allocation unit 802, and the first sending unit 803. Details are not described herein again.

Further, in this possible design, the live service server may simultaneously apply to at least two multicast resource management servers for multicast resources, to be specific, multicast IP addresss. It may be understood that in this way, multicast can be performed within a coverage area of a plurality of multicast resource management servers, thereby effectively extending a coverage area of a multicast capability.

Embodiment 4 and Embodiment 5 respectively describe in detail the live service server and the multicast resource management server in the embodiments of this application in terms of a function. The following separately describes the live service server and the multicast resource management server in the embodiments of this application in terms of a hardware structure. Details may be as follows:

Embodiment 6: Referring to FIG. 11, another embodiment of the live service server in the embodiments of this application includes the following descriptions:

FIG. 11 is a schematic structural diagram of a live service server according to an embodiment of this application. The live service server may vary greatly due to different configurations or performance, and may include one or more CPUs 1122 (for example, one or more processors), a memory 1132, and one or more storage media 1130 (for example, one or more mass storage devices) that store an application program 1142 or data 1144. The memory 1132 and the storage medium 1130 each may be a transitory storage or a persistent storage. A program stored in the storage medium 1130 may include one or more modules (not shown in the figure), and each module may include a series of instruction operations for the server. Still further, the CPU 1122 may be set to communicate with the storage medium 1130 to perform, on the live service server, a series of instruction operations in the storage medium 1130.

The CPU 1122 may invoke an operation instruction in the storage medium 1130 to perform the operations of the live service server in the embodiments corresponding to FIG. 2A and FIG. 2B and FIG. 3. The operations may include the following operations:
sending a live stream injection request to a multicast resource management server, where the live stream injection request is used to instruct the multicast resource management server to allocate a live stream injection node;
receiving a live stream injection response sent by the multicast resource management server, where the live stream injection response includes a live stream injection node address;
sending a live stream injection instruction to a live stream injection node according to the live stream injection node address, where the live stream injection instruction carries a multicast IP address and authentication information, so that the live stream injection node returns response information after authentication succeeds;
receiving a stream pushing address sent by the live stream injection node; and
instructing a live content source to send a live stream to the live stream injection node corresponding to the stream pushing address, so that the live stream injection node corresponding to the stream pushing address multicasts the live stream by using the multicast IP address.

It should be noted that, in addition to the foregoing operations, the CPU 1122 is further configured to perform steps performed by the live service server in the embodiments of this application.

The live service server may further include one or more power supplies 1126, one or more wired or wireless network interfaces 1150, one or more input/output interfaces 1158, and/or one or more operating systems 1141 such as Windows ServerTM, Mac OS XTM, UnixTM, LinuxTM, and FreeBSDTM.

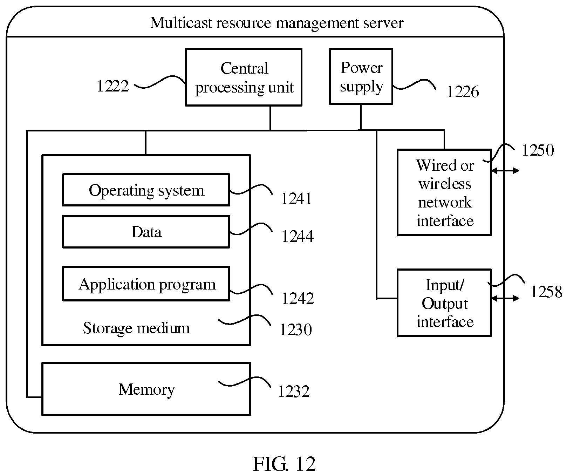

Embodiment 7: Referring to FIG. 12, another embodiment of the multicast resource management server in the embodiments of this application includes the following descriptions:

FIG. 12 is a schematic structural diagram of a multicast resource management server according to an embodiment of this application. The multicast resource management server may vary greatly due to different configurations or performance, and may include one or more CPUs 1222 (for example, one or more processors), a memory 1232, and one or more storage media 1230 (for example, one or more mass storage devices) that store an application program 1242 or data 1244. The memory 1232 and the storage medium 1230 each may be a transitory storage or a persistent storage. A program stored in the storage medium 1230 may include one or more modules (not shown in the figure), and each module may include a series of instruction operations for the server. Still further, the CPU 1222 may be set to communicate with the storage medium 1230 to perform, on the multicast resource management server, a series of instruction operations in the storage medium 1230.

The CPU 1222 may invoke an operation instruction in the storage medium 1230 to perform the operations of the multicast resource management server in the embodiments corresponding to FIG. 2A and FIG. 2B and FIG. 3. The operations may include the following operations:
receiving a live stream injection request sent by a live service server, where the live stream injection request is used to instruct the multicast resource management server to allocate a live stream injection node;
allocating, by the multicast resource management server a live stream injection node address according to an address of a live content source when the multicast resource management server receives the live stream injection request sent by the live service server; and
sending a live stream injection response to the live service server, where the live stream injection response includes the live stream injection node address.

It should be noted that, in addition to the foregoing operations, the CPU 1222 is further configured to perform steps performed by the multicast resource management server in the embodiments of this application.

The multicast resource management server may further include one or more power supplies 1226, one or more wired or wireless network interfaces 1250, one or more input/output interfaces 1258, and/or one or more operating systems 1241 such as Windows ServerTM, Mac OS XTM, UnixTM, LinuxTM, and FreeBSDTM.

It may be clearly understood by persons skilled in the art that, for the purpose of convenient and brief description, for a detailed working process of the foregoing system, apparatus, and unit, reference may be made to a corresponding process in the foregoing method embodiments, and details are not described herein.

In the several embodiments provided in this application, it should be understood that the disclosed system, apparatus, and method may be implemented in other manners. For example, the described apparatus embodiments are merely examples. For example, the unit division is merely logical function division, and there may be another division manner during actual implementation. For example, a plurality of units or components may be combined or integrated into another system, or some features may be ignored or may not be performed. In addition, the displayed or discussed mutual couplings or direct couplings or communication connections may be implemented by using some interfaces. The indirect couplings or communication connections between the apparatuses or units may be implemented in electronic, mechanical, or other forms.

The units described as separate parts may or may not be physically separate, and parts displayed as units may or may not be physical units, to be specific, may be located in one position, or may be distributed on a plurality of network units. Some or all of the units may be selected according to an actual requirement to achieve the objectives of the solutions of the embodiments.

In addition, the function units in the embodiments of this application may be integrated into one processing unit, or each of the units may exist alone physically, or two or more units may be integrated into one unit. The integrated unit may be implemented in a form of hardware, or may be implemented in a form of a software function unit.

When the integrated unit is implemented in the form of a software function unit and sold or used as an independent product, the integrated unit may be stored in a computer-readable storage medium. Based on such an understanding, the technical solutions of this application essentially, or the part contributing to the prior art, or all or some of the technical solutions may be implemented in a form of a software product. The computer software product is stored in a storage medium and includes several instructions for instructing a computer device (which may be a personal computer, a server, a network device, or the like) to perform all or some of the steps of the methods described in the embodiments of this application. The storage medium includes any medium that can store program code, such as a USB flash drive, a removable hard disk, a read-only memory (ROM, Read-Only Memory), a random access memory (RAM, Random Access Memory), a magnetic disk, or an optical disc.

The foregoing embodiments are merely intended for describing the technical solutions of this application, but not for limiting this application. Although this application is described in detail with reference to the foregoing embodiments, persons of ordinary skill in the art should understand that they may still make modifications to the technical solutions recorded in the foregoing embodiments or make equivalent replacements to some technical features thereof, without departing from the scope of the technical solutions of the embodiments of this application.

## Claims

1. A multicast implementation method, comprising:
sending (201), by a live service server, a multicast resource allocation request to a multicast resource management server, wherein the multicast resource allocation request comprises a channel identifier;
receiving (203), by the live service server, a multicast resource allocation response sent by the multicast resource management server, wherein the multicast resource allocation response comprises a correspondence between the channel identifier and the multicast IP address;
sending (204), by the live service server, a live stream injection request to the multicast resource management server, wherein the live stream injection request is used to instruct the multicast resource management server to allocate a live stream injection node configured to inject a live stream into a network for the live stream to be transmitted in the network;
receiving (206), by the live service server, a live stream injection response sent by the multicast resource management server, wherein the live stream injection response comprises a live stream injection node address;
sending (207), by the live service server, a live stream injection instruction to a live stream injection node according to the live stream injection node address, wherein the live stream injection instruction carries a multicast IP address and authentication information, so that the live stream injection node returns response information after authentication succeeds;
receiving (208), by the live service server, a stream pushing address sent by the live stream injection node; and
instructing (209), by the live service server, a live content source to send a live stream to the live stream injection node according to the stream pushing address, so that the live stream injection node corresponding to the stream pushing address multicasts the live stream by using the multicast IP address,
wherein the sending (204), by the live service server, a multicast resource allocation request to the multicast resource management server comprises:
sending, by the live service server, the multicast resource allocation request to the multicast resource management server when a quantity of target clients is greater than a first threshold, wherein the target client is a client that has joined, by using the multicast IP address, a multicast channel corresponding to the channel identifier.

2. The multicast implementation method according to claim 1, after the receiving, by the live service server, a multicast resource allocation response sent by the multicast resource management server, further comprising:
sending (218), by the live service server, a multicast resource release request to the multicast resource management server, wherein the multicast resource release request comprises the correspondence between the channel identifier and the multicast IP address; and
receiving (220), by the live service server, a multicast resource release response sent by the multicast resource management server, wherein the multicast resource release response is used to instruct the live service server that the correspondence between the channel identifier and the multicast IP address has been released.

3. The multicast implementation method according to claim 1, wherein when there are N multicast resource management servers and N is a positive integer greater than 1, the sending, by the live service server, a multicast resource allocation request to the multicast resource management server comprises:
sending, by the live service server, N multicast resource allocation requests to the N multicast resource management servers, wherein one multicast resource management server receives only one multicast resource allocation request, and one multicast resource allocation request is used to instruct one multicast resource management server to allocate one multicast IP address to the channel identifier; and
the receiving, by the live service server, a multicast resource allocation response sent by the multicast resource management server comprises:
receiving, by the live service server, N multicast resource allocation responses sent by the N multicast resource management servers, wherein one multicast resource management server sends only one multicast resource allocation response, and one multicast resource allocation response is used to indicate one multicast IP address allocated by one multicast resource management server to the channel identifier.

4. The multicast implementation method according to claim 1, after the receiving, by the live service server, a multicast resource allocation response sent by the multicast resource management server, further comprising:
sending, by the live service server, an instruction message comprising the correspondence between the channel identifier and the multicast IP address to an OTT portal site, so that a client joins, according to the multicast IP address, a multicast channel corresponding to the channel identifier.

5. A live service server, comprising:
an input device, an output device, a memory (1132), and a processor (1122), wherein
the memory is configured to store an operation instruction; and
the processor is configured to invoke the operation instruction to perform the operations according to claims 1 to 4.

## Patentansprüche

1. Verfahren zur "Multicast"-Implementierung, umfassend:
Senden (201) einer "Multicast"-Ressourcenzuweisungsanforderung zu einem "Multicast"-Ressourcenmanagement-Server durch einen Live-Service-Server, wobei die "Multicast"-Ressourcenzuweisungsanforderung eine Kanalkennung umfasst;
Empfangen (203) einer durch den "Multicast"-Ressourcenmanagement-Server gesendeten "Multicast"-Ressourcenzuweisungsantwort durch den Live-Service-Server, wobei die "Multicast"-Ressourcenzuweisungsantwort eine Entsprechung zwischen der Kanalkennung und der "Multicast"-IP-Adresse umfasst;
Senden (204), durch den Live-Service-Server, einer Live-Stream-Einspeiseanforderung zu dem "Multicast"-Ressourcenmanagement-Server, wobei die Live-Stream-Einspeiseanforderung verwendet wird, um den "Multicast"-Ressourcenmanagement-Server anzuweisen, einen Live-Stream-Einspeiseknoten zuzuweisen, der dafür ausgelegt ist, einen Live-Stream zur Übertragung des Live-Streams in dem Netzwerk in ein Netzwerk einzuspeisen;
Empfangen (206) einer durch den "Multicast"-Ressourcenmanagement-Server gesendeten Live-Stream-Einspeiseantwort durch den Live-Service-Server, wobei die Live-Stream-Einspeiseantwort eine Live-Stream-Einspeiseknotenadresse umfasst;
Senden (207), durch den Live-Service-Server, einer Live-Stream-Einspeiseanweisung zu einem Live-Stream-Einspeiseknoten entsprechend der Live-Stream-Einspeiseknotenadresse, wobei die Live-Stream-Einspeiseanweisung eine "Multicast"-IP-Adresse und Authentifizierungsinformationen führt, sodass der Live-Stream-Einspeiseknoten nach der erfolgreichen Authentifizierung Antwortinformationen zurückleitet;
Empfangen (208) einer durch den Live-Stream-Einspeiseknoten gesendeten Stream-"Pushing"-Adresse durch den Live-Service-Server; und
Anweisen (209) einer Live-Inhaltsquelle durch den Live-Service-Server zum Senden eines Live-Streams zu dem Live-Stream-Einspeiseknoten entsprechend der Stream-"Pushing"-Adresse, sodass der der Stream-"Pushing"-Adresse entsprechende Live-Stream-Einspeiseknoten den Live-Stream unter Verwendung der "Multicast"-IP-Adresse per "Multicast" sendet;
wobei das Senden (204) einer "Multicast"-Ressourcenzuweisungsanforderung zu dem "Multicast"-Ressourcenmanagement-Server durch den Live-Service-Server umfasst:
Senden der "Multicast"-Ressourcenzuweisungsanforderung zu dem "Multicast"-Ressourcenmanagement-Server durch den Live-Service-Server, wenn eine Menge von Ziel-Clients größer als ein erster Schwellenwert ist, wobei der Ziel-Client ein Client ist, der unter Verwendung der "Multicast"-IP-Adresse einem der Kanalkennung entsprechenden "Multicast"-Kanal beigetreten ist.

2. Verfahren zur "Multicast"-Implementierung nach Anspruch 1, nach dem Empfangen einer von dem "Multicast"-Ressourcenmanagement-Server gesendeten "Multicast"-Ressourcenzuweisungsantwort durch den Live-Service-Server, ferner umfassend:
Senden (218) einer "Multicast"-Ressourcenfreigabeanforderung zu dem "Multicast"-Ressourcenmanagement-Server durch den Live-Service-Server, wobei die "Multicast"-Ressourcenfreigabeanforderung die Entsprechung zwischen der Kanalkennung und der "Multicast"-IP-Adresse umfasst; und
Empfangen (220) einer von dem "Multicast"-Ressourcenmanagement-Server gesendeten "Multicast"-Ressourcenfreigabeantwort durch den Live-Service-Server,
wobei die "Multicast"-Ressourcenfreigabeantwort verwendet wird, um dem Live-Service-Server mitzuteilen, dass die Entsprechung zwischen der Kanalkennung und
der "Multicast"-IP-Adresse freigegeben worden ist.

3. Verfahren zur "Multicast"-Implementierung nach Anspruch 1, wobei, wenn N "Multicast"-Ressourcenmanagement-Server vorliegen und N eine positive Ganzzahl größer als 1 ist, das Senden einer "Multicast"-Ressourcenzuweisungsanforderung zu dem "Multicast"-Ressourcenmanagement-Server durch den Live-Service-Server umfasst:
Senden von N "Multicast"-Ressourcenzuweisungsanforderungen durch den Live-Service-Server zu den N "Multicast"-Ressourcenmanagement-Servern, wobei ein "Multicast"-Ressourcenmanagement-Server nur eine "Multicast"-Ressourcenzuweisungsanforderung empfängt und eine "Multicast"-Ressourcenzuweisungsanforderung verwendet wird, um einen "Multicast"-Ressourcenmanagement-Server anzuweisen, der Kanalkennung eine "Multicast"-IP-Adresse zuzuweisen; und
das Empfangen einer von dem "Multicast"-Ressourcenmanagement-Server gesendeten "Multicast"-Ressourcenzuweisungsantwort durch den Live-Service-Server umfasst:
Empfangen von durch die N "Multicast"-Ressourcenmanagement-Server gesendeten N "Multicast"-Ressourcenzuweisungsantworten durch den Live-Service-Server, wobei ein "Multicast"-Ressourcenmanagement-Server nur eine "Multicast"-Ressourcenzuweisungsantwort sendet und eine "Multicast"-Ressourcenzuweisungsantwort verwendet wird, um eine "Multicast"-IP-Adresse anzugeben, die durch einen "Multicast"-Ressourcenmanagement-Server der Kanalkennung zugewiesen worden ist.

4. Verfahren zur "Multicast"-Implementierung nach Anspruch 1, nach dem Empfangen einer von dem "Multicast"-Ressourcenmanagement-Server gesendeten "Multicast"-Ressourcenzuweisungsantwort durch den Live-Service-Server ferner umfassend:
Senden einer Anweisungsnachricht durch den Live-Service-Server, umfassend die Entsprechung zwischen der Kanalkennung und der "Multicast"-IP-Adresse mit einer OTT-Portal-Site, sodass ein Client entsprechend der "Multicast"-IP-Adresse einem der Kanalkennung entsprechenden "Multicast"-Kanal beitritt.

5. Live-Service-Server, umfassend:
eine Eingabeeinrichtung, eine Ausgabeeinrichtung, einen Speicher (1132) und einen Prozessor (1122), wobei der Speicher ausgelegt ist zum Speichern einer Betriebsanweisung; und
der Prozessor ausgelegt ist zum Aufrufen der Betriebsanweisung, um die Operationen nach den Ansprüchen 1 bis 4 durchzuführen.

## Revendications

1. Procédé de mise en œuvre de multidiffusion, comprenant :
l'envoi (201), par un serveur de service en direct, d'une demande d'attribution de ressources de multidiffusion à un serveur de gestion de ressources de multidiffusion, la demande d'attribution de ressources de multidiffusion comprenant un identifiant de canal ;
la réception (203), par le serveur de service en direct, d'une réponse d'attribution de ressources de multidiffusion envoyée par le serveur de gestion de ressources de multidiffusion, la réponse d'attribution de ressources de multidiffusion comprenant une correspondance entre l'identifiant de canal et l'adresse IP de multidiffusion ;
l'envoi (204), par le serveur de service en direct, d'une demande d'injection de flux en direct au serveur de gestion de ressources de multidiffusion, la demande d'injection de flux en direct étant utilisée pour donner pour instruction au serveur de gestion de ressources de multidiffusion d'attribuer un nœud d'injection de flux en direct configuré pour injecter un flux en direct dans un réseau pour que le flux en direct soit transmis sur le réseau ;
la réception (206), par le serveur de service en direct, d'une réponse d'injection de flux en direct envoyée par le serveur de gestion de ressources de multidiffusion, la réponse d'injection de flux en direct comprenant une adresse de nœud d'injection de flux en direct ;
l'envoi (207), par le serveur de service en direct, d'une instruction d'injection de flux en direct à un nœud d'injection de flux en direct selon l'adresse de nœud d'injection de flux en direct, l'instruction d'injection de flux en direct transportant une adresse IP de multidiffusion et des informations d'authentification, de sorte que le nœud d'injection de flux en direct renvoie des informations de réponse après que l'authentification a réussi ;
la réception (208), par le serveur de service en direct, d'une adresse de poussée de flux envoyée par le nœud d'injection de flux en direct ; et
l'instruction (209), par le serveur de service en direct, à une source de contenu en direct d'envoyer un flux en direct au nœud d'injection de flux en direct en fonction de l'adresse de poussée de flux, de sorte que le nœud d'injection de flux en direct correspondant à l'adresse de poussée de flux diffuse en multidiffusion le flux en direct en utilisant l'adresse IP de multidiffusion,
l'envoi (204), par le serveur de service en direct, d'une demande d'attribution de ressources de multidiffusion au serveur de gestion de ressources de multidiffusion comprenant :
l'envoi, par le serveur de service en direct, de la demande d'attribution de ressources de multidiffusion au serveur de gestion de ressources de multidiffusion lorsqu'une quantité de clients cibles est supérieure à un premier seuil, le client cible étant un client qui a rejoint, en utilisant l'adresse IP de multidiffusion, un canal de multidiffusion correspondant à l'identifiant de canal.

2. Procédé de mise en œuvre de multidiffusion selon la revendication 1, après la réception, par le serveur de service en direct, d'une réponse d'attribution de ressources de multidiffusion envoyée par le serveur de gestion de ressources de multidiffusion, comprenant en outre :
l'envoi (218), par le serveur de service en direct, d'une demande de libération de ressources de multidiffusion au serveur de gestion de ressources de multidiffusion, la demande de libération de ressources de multidiffusion comprenant la correspondance entre l'identifiant de canal et l'adresse IP de multidiffusion ; et
la réception (220), par le serveur de service en direct, d'une réponse de libération de ressources de multidiffusion envoyée par le serveur de gestion de ressources de multidiffusion, la réponse de libération de ressources de multidiffusion étant utilisée pour informer le serveur de service en direct que la correspondance entre l'identifiant de canal et l'adresse IP de multidiffusion a été libérée.

3. Procédé de mise en œuvre de multidiffusion selon la revendication 1, dans lequel, lorsqu'il y a N serveurs de gestion de ressources de multidiffusion et que N est un nombre entier positif supérieur à 1, l'envoi, par le serveur de service en direct, d'une demande d'attribution de ressources de multidiffusion au serveur de gestion de ressources de multidiffusion comprend :
l'envoi, par le serveur de service en direct, de N demandes d'attribution de ressources de multidiffusion aux N serveurs de gestion de ressources de multidiffusion, un serveur de gestion de ressources de multidiffusion recevant uniquement une demande d'attribution de ressources de multidiffusion, et une demande d'attribution de ressources de multidiffusion étant utilisée pour donner pour instruction à un serveur de gestion de ressources de multidiffusion d'attribuer une adresse IP de multidiffusion à l'identifiant de canal ; et
la réception, par le serveur de service en direct, d'une réponse d'attribution de ressources de multidiffusion envoyée par le serveur de gestion de ressources de multidiffusion comprend :
la réception, par le serveur de service en direct, de N réponses d'attribution de ressources de multidiffusion envoyées par les N serveurs de gestion de ressources de multidiffusion, un serveur de gestion de ressources de multidiffusion envoyant uniquement une réponse d'attribution de ressources de multidiffusion, et une réponse d'attribution de ressources de multidiffusion étant utilisée pour indiquer une adresse IP de multidiffusion attribuée par un serveur de gestion de ressources de multidiffusion à l'identifiant de canal.

4. Procédé de mise en œuvre de multidiffusion selon la revendication 1, après la réception, par le serveur de service en direct, d'une réponse d'attribution de ressources de multidiffusion envoyée par le serveur de gestion de ressources de multidiffusion, comprenant en outre :
l'envoi, par le serveur de service en direct, d'un message d'instruction comprenant la correspondance entre l'identifiant de canal et l'adresse IP de multidiffusion à un site de portail OTT, de sorte qu'un client rejoigne, selon l'adresse IP de multidiffusion, un canal de multidiffusion correspondant à l'identifiant de canal.

5. Serveur de service en direct, comprenant :
un dispositif d'entrée, un dispositif de sortie, une mémoire (1132), et un processeur (1122),
la mémoire étant configurée pour stocker une instruction d'opérations ; et
le processeur étant configuré pour invoquer l'instruction d'opérations pour effectuer les opérations selon les revendications 1 à 4.
